# EUROPEAN PATENT SPECIFICATION

(11) **EP 3 377 744 B1**
(45) Date of publication and mention of the grant of the patent: **14.04.2021**
(21) Application number: 15808456.6
(22) Date of filing: 20.11.2015
(51) Int. Cl.: F02B 77/02, B01J 23/10, F02B 3/02

(54) **STRATIFIED CHARGE COMBUSTION ENGINE**
SCHICHTLADUNGSVERBRENNUNGSMOTOR
MOTEUR À COMBUSTION À CHARGE STRATIFIÉE

(43) Date of publication of application: 26.09.2018
(73) Proprietor: McEarth Holdings Ltd, Co. Cork (IE)
(72) Inventor: BOSTEELS, Dominique, Co Cork (IE)
(74) Representative: Powis de Tenbossche, Roland
(86) International application number: PCT/IB2015/002196
(87) International publication number: WO 2017/085524

(56) References cited:
- US-A1- 2005 163 691
- US-A1- 2007 220 873
- US-A1- 2014 274 675

## Description

### Abstract of the disclosure

The invention relates to an at least partly stratified (such as at least partly dual stratified) charge combustion engine, especially CAI (combustion assisted ignition), HCC, HCSI and HCCI engine, in which the combustion of a hydrocarbon containing fuel generating a flame emitting photon is operated in a chamber with a wall provided with a cerium oxide - carbon containing coating, said coating further comprising at least comprising oxides of the followings elements Pr, Nd, La, Y and Zr. The engine of the invention enables a catalytic reduction of NOx exhaust rate.

### The prior art

Combustion of fuel can be operated a cold combustion or a hot combustion, by reacting a fuel with oxygen or oxygen containing medium, said reaction comprising oxidation reaction as well as reduction reaction.

Fuel efficiency is nowadays more problematic, due to pollution and health problems generated by said pollution.

Fuel efficiency for engines (such as internal combustion engines, external combustion engines, with or without turbo, EGR, etc., possibly as hybrid engines), especially for on road vehicles (like cars and trucks, as well as bikes), ships, trains, flying apparatuses (like aeroplanes), which were considered by mechanical engineers as substantially complete, is more and more questioned, as assumed efficiency figures are not corresponding to the current figures achieved by the end user, for example for cars and trucks, with moreover higher than foreseen CO and NOx exhaust rates, as well as higher CO2 exhaust rates.

The proposed system for improving efficiency comprises for example system enabling direct injection, most particularly controlled continuous or intermittent direct injection, instead of fuel admission through the air intake manifold or through a port fuel tube.

As disclosed in US8347613, direct injection (DI) engines may produce more soot than port fuel injected engines in part due to diffuse flame propagation. As a consequence of diffuse flame propagation, fuel may not adequately mix with air prior to combustion, resulting in pockets of rich combustion that generate soot. Further, DI engines may be susceptible to generating soot during high load and/or high speed conditions when there is a lack of sufficient air and fuel mixing.

For solving this particle problem, it has been proposed to apply particulate filters to DI, spark-ignition engines or compression ignition engines, leading then the problem of regular filter regeneration steps, during which accurate emission control is difficult to maintain during particulate filter regeneration in a DI, spark-ignition engine. Such filter reduces however the engine efficiency, as generating a pressure drop in the exhaust filter. Due to the high volume of small particles and soot, filter is quickly at least partly clogged. Soot will also generate other problems with respect to gas recycling systems (EGR), that will clog too.

The patent US8347613 suggests for solving said problem particle clogging of the filter to generate compressed air and to push said compressed air through the particulate filter, meaning thus that small particles are released back into the atmosphere.

Homogeneous charge combustion has also been proposed for increasing the fuel efficiency. More and more researches have therefor been directed to systems for ensuring CAI, HCC, especially HCCI and HCSI.

For example US7290522 (Prof Heywood et al) relates to homogeneous charge compression ignition (HCCI) engine. As stated by Professor Heywood of the MIT, the use of HCCI combustion ensures high engine efficiency with extremely low NOx, CO and particulate emissions.

Professor Heywood teaches the use of hydrogen and hydrogen mixed with CO in order to enhance knock resistance, and thus resistance to auto ignition, i.e. auto ignition generated at higher temperature and pressure.

It means thus well that for expert in the chemistry of the fuel combustion in engine, the efficiency of the combustion can still be improved, with moreover reduced NOx, CO and particles emissions.

The admission of Hydrogen possibly mixed with CO in a combustion chamber is not easy and lead to several technical problems, such as the storage of hydrogen.

In order to improve the efficiency of fuel combustion, it has been already proposed by the present inventor to operate the combustion of the fuel in presence of a heterogeneous catalyst comprising some cerium and carbon. For example, reference can be done to WO2006017915, US7482303, US7188470, EP1590555B1, and US7723257.

US2005/163691 discloses a catalytic aluminium support provided with a cerium oxide - carbon coating comprising the following metal oxides:
Ce (as CeO₂) : 29.5 %,
Pr (as Pr₆O₁₁) : 8%
La(as La₂O₃) : 0.9%
Nd(as Nd₂O₃) : 8%
Zr(as ZrO₂) : the balance (i.e. 53.6%)

The invention is using a heterogeneous catalytic system comprising rare earth metals. Problems associated to heterogeneous catalytic system are among other limited catalytic life time, variable working efficiency in function of reaction conditions, etc.

The experience and further searches carried out by the inventor have shown that catalyst could be still be improved, for fuel efficiency purposes for a long period of time, as well as for variable working conditions. The new catalyst of the invention enables also an easier control of the working of the engine, while being submitted to variation of load or speed. The system of the invention is thus a dynamic bi functional or hybrid system combining rare earth metal oxides and non rare earth metal oxides, together with carbon particles. The system of the invention uses a catalytic coating having a good thermal resistance, a good catalytic longevity, a good resistance to vibrations, pressure variations. It seems that some metal elements of the catalyst coating are sintered with the metal surface of the combustion chamber (for example of the aluminium alloy of the combustion chamber). It was observed that catalytic efficiency or working was achieved from low temperature (such as temperature of less than 300°C) up to high temperature (such as temperature higher that 700°C, or even higher than 900°C). It was observed that catalyst coatings of the invention were suitable to catalyse redox reactions on and in the porous catalytic coating. It was also observed that due to the catalyst coating of the invention, some flame quenching could be prevented, such as side wall quenching and/or tube quenching (cylinder quenching). It was also observed that ionisation current was better conserved adjacent to the catalyst coating. Without being bound to any theory, it is expected that the catalyst coating ensures within the free volume of the combustion chamber a thicker intermediate layer between the flame plasma and the catalyst coating of the invention, with respect to a combustion chamber not provided with the catalyst coating. Without being bound to any theory, it is expected that the catalyst coating of the invention ensures a more controlled ionisation level, with reduced chemi ionisation peak and thermal ionisation peak, even in presence of large excess of air, such as with lambda value of more than 1.4, or even 1.5. It seems also that the temperature of the face of the wall of the combustion chamber is less subject to high variations, despite intake step and exhaust step in particular in a four-cycle engine.

The control of chemical catalysis is disclosed in US7998538 (California Institute of Technology). As stated in said documents, many catalytic reactions have a temperature threshold. Prior art methods utilise macroscopic heat source to provide heat for such reactions and typically entail gross convection, gross conduction, or gross radiation. Inherent with the use of such conventional methods of heating, is the difficulty of having control of the temperature of a catalyst, the vicinity of the catalyst and/or the heat applied, both temporally and spatially.

In a combustion chamber of current engine, reaction is substantially operated in the volume of the chamber, without heterogeneous catalyst. In the engine of the invention, wall of the combustion chamber is coated with a catalyst coating, the working of said catalyst coating being controlled by photon-electron interactions, said interactions having not only localised effect on the temperature of the coating, but also on the local charging of photon-electron of the coating for controlling local radical reaction on the catalyst coating.

When burning fuel, a large quantity of photon-electron energy is emitted. In the current engine, said photon-electrons are not used for catalytic efficiency purposes.

### Brief description of the invention

The invention relates to an at least partly stratified charge combustion engine, for example stratified combustion along one surface (like the head surface of the piston surface) or along several surfaces (like two opposite surfaces, such as the head surface and the piston surface) as claimed in claim 1.

In the engine of the invention, the combustion of a hydrocarbon containing fuel generating a flame emitting photon is operated in a chamber with a wall provided with a cerium oxide - carbon containing coating, said cerium oxide - carbon containing coating being adapted for controlling the formation of H+ or [H'] species on the cerium oxide - carbon containing coating of the chamber, while controlling the hydrogen branching reactions by catalysing the use of oxygen atoms from Ce, Pr, Nd, La, Y and Zr oxides for reacting with hydrogen H₂ for the formation of H₂O on the wall of the chamber.
The cerium oxide - carbon containing coating has advantageously a thickness of less than 100µm, such as less than 70µm, for example a thickness from 10 to 70µm.

Carbon containing coating in the present invention means a coating comprising graphite carbon, most preferably like as 2dimensional-graphene structures (such as structures with a larger Raman intensity peak between 2600 - 2700 Raman shift (1/cm) than the Raman peak intensity between 1500 - 1700 Raman shift (1/cm). The carbon containing coating of the invention is preferably a coating for which at least 30% by weight of the carbon is in a form of 2dimensional-graphene structure, advantageously mixed with graphite having the structure of nanotubes (such as single wall carbon nano tubes, double wall carbon nano tubes or multi wall carbon nano tubes) and/or fullerene and/or combinations thereof.

The catalytic coating disclosed for the combustion chamber of the engine of the invention can also be used for other purposes, such as for the post treatment of exhaust gases, especially exhaust gases containing fuel and/or carbon containing particles. The catalyst coating is then advantageously supported on an aluminium containing support, an alumino silicate support and/or alumino phospho-silicate support, like a cordierite-like support.

Advantageously, the cerium - carbon coating is adapted for capturing photons emitted by the flame with wavelength from 6500 to 7500Å, advantageously for capturing 5 to 25% of the photons with wavelength from 6500 to 7500Å emitted by the flame having a temperature higher than 800°C.

According to an advantageous embodiment, the cerium - carbon coating is adapted for ensuring a photon amplified spectrum emission radiation at least at a temperature comprised between 500 and 800°C, said spectrum covering advantageously substantially the whole range from about 4000Å up to 7500Å (i.e. ensuring thus emission of rays in the violet range (wave length from 4000Å up to about 4500Å), in the blue range (wave length from 4500 Å up to 5200 Å), in the green range (from about 5200Å up to about 5700Å), in the yellow range (from about 5700Å up to about 5900Å), in the orange range (from about 5900 Å up to 6250 Å) and in the red range (from about 6250Å up to about 7500Å). The emission is advantageously controlled so that emission from the coating occurs substantially continuously from about 300°C up to about 900°C.

Preferably, the engine comprises at least four successive steps, namely an intake step for charging the combustion chamber with at least oxygen and nitrogen, a compression step in which said at least oxygen and nitrogen is compressed, a combustion step in the combustion chamber (comprising advantageously at least partly an expansion step), and an exhaust step for the exhaust of gases present in the combustion chamber, whereby at least during one step selected from the group of the intake step and compression step, the cerium oxide - carbon coating comprising oxides of the followings elements Pr, Nd, La, Y and Zr, is adapted for uptake of oxygen atoms at temperature comprised between 100 and 400°C.

According to a further embodiment, the cerium oxide - carbon coating comprising oxides of the followings elements Pr, Nd, La, Y and Zr, is adapted for uptake of hydrogen atoms (especially in the form of hydrogen species H˙) at least at temperature comprised between 300 and 700°C. It is expected that some cracking of the fuel is operated at temperature below 500°C and at pressure higher than 5 10⁵ Pa.

According to an embodiment, the presence of Pr, Nd, La, Y and Zr oxides in the cerium oxide - carbon containing coating acts advantageously as catalyst for the reaction of oxygen stored in the coating with hydrogen H₂ and/or hydrogen species for the formation of water at least at temperature above 500°C and pressure higher than 30 10⁵Pa.

Advantageous embodiments of the invention comprise one or more of the following characteristics, advantageously a plurality of the following characteristics :
- the cerium - carbon containing coating is appropriate so that the hydrocarbon containing fuel is converted into carbon containing species or molecules and into hydrogen and hydrogen species, at least at temperature above 500°C and pressure above 20 10⁵ Pa.
- the cerium oxide - carbon containing coating comprises enough oxides of Pr, Nd, La, Y and Zr, so as to reduce at least by 50 mole % that hydrogen H₂ molecules contacting the cerium - carbon containing coating are converted into free H species and free OH species, at temperature above 500°C and pressure above 20 10⁵ Pa.
- the cerium oxide - carbon containing coating comprises enough oxides of Pr, Nd, La, Y and Zr, so as to reduce at least by 75 mole % that hydrogen H₂ molecules contacting the cerium - carbon containing coating is converted into free H species and free OH species, at temperature above 500°C and pressure above 20 10⁵Pa.
- the cerium - carbon containing coating is adapted, after capturing photon emitted by the flame generated by the combustion of the carbon containing fuel, for generating at least adjacent to the cerium - carbon containing coating, spectra covering substantially continuously the whole range of spectra from about 4000 Å up to about 7500 Å.
- the cerium - carbon containing coating is adapted for capturing photon emitted by the flame generated by the combustion of the carbon containing fuel, and/or, advantageously and, for generating at least adjacent to the cerium - carbon containing coating, spectra covering substantially continuously the whole range of spectra from about 4000 Å up to about 7500 Å.
- the cerium - carbon containing coating is adapted for controlling the number of photons in the combustion chamber during at least the combustion of the carbon containing fuel, said photons being advantageously a mix of photons covering the whole range spectra from about 4000 Å up to about 7500 Å.
- the cerium - carbon containing coating comprises some aluminium, preferably in its oxide or hydroxide form and/or in the form of alumino-silicate, whereby the aluminium metal content of the catalyst coating with respect to the total metal weight content of the catalyst coating of metal selected from Al, Ce, Pr, Nd, La, Y and Zr is comprised between 1 and 10%.
- the engine comprises cylinders having an alumino containing face, especially an alumino-silica containing face, said face being at least partly provided with the cerium- carbon containing coating.
- the catalyst coating further comprises aluminium oxide and/or aluminosilicate.
- The catalyst coating has a thickness of less than 500nm, advantageously less than 300nm.
- the catalyst coating has the structure of largest particles with a size greater than 100nm, with particles with a size of less than 70nm (preferably less than 30nm) extending within the void created between the largest particles.
- the cerium oxide - carbon containing catalyst is a catalyst controlling at least the branching reaction of H˙ species with O₂ on the said catalyst, as well as for controlling the branching reaction of ˙O˙ species with H₂ on the said catalyst.
- the catalyst coating is substantially free or free of Pd, Pt, Rh, Cu and combinations thereof.
- at least 50% of the carbon present in the cerium oxide - carbon containing coating is the form of graphene units, possibly with some overlapping portions.
- the cerium oxide - carbon containing catalyst is adapted for controlling the formation of carbon particles in the form of porous graphite, especially in the form of graphene particles, within the combustion chamber, especially on the catalyst coating, and/or for reducing the exhaust of soot particles from the combustion chamber.
- the cerium oxide - carbon containing catalyst is adapted for emitting in function of the temperature rays with wave lengths in the violet range, rays in the blue range, rays in the green range, rays in the yellow range, as well as rays within the red range.
- the cerium oxide - carbon containing catalyst is adapted for controlling the formation of carbon particles in the form of porous graphite, especially in the form of graphene particles, within the combustion chamber, especially on the cerium oxide - carbon containing coating, and/or for reducing the exhaust of soot particles from the combustion chamber.
- the cerium oxide - carbon containing catalyst is adapted for emitting in function of the temperature rays with wave lengths in the violet range, rays with wavelengths in the blue range, rays with wave lengths in the green range, rays with wave lengths in the yellow range, as well as rays with wave lengths in the red range.
- the engine is an at least partly dual stratified charge combustion engine, having advantageously two opposite surfaces provided with the cerium oxide - carbon containing catalyst, said opposite surfaces being preferably piston head surfaces or surfaces of two opposite moving piston heads.
   - combinations thereof.

The invention relates also to a process of producing mechanical energy by burning a fuel into an air containing atmosphere in the combustion chamber(s) of an engine of the invention, whereby the cerium oxide - carbon containing coating / catalyst is submitted to a cycle comprising at least a step of oxygen removal from the air containing atmosphere by oxygen capture in the catalyst, and a step of water vapour formation at the catalyst level by reaction of hydrogen or hydrogen species.

The invention further relates to a catalyst precursor for a catalyst of an engine according to the invention, said catalyst being a cerium oxide - carbon containing coating as disclosed in claim 1,
in which the catalyst precursor is such that the relative weight of the metals selected from Ce, Pr, La, Nd, Y and Zr, expressed as oxide CeO₂, Pr₆O₁₁, La₂O₃, Nd₂O₃, Y₂O₃. and ZrO₂ of the cerium oxide - carbon containing coating with respect to total weight of the said metals expressed as oxides are :
Ce (as CeO₂) : 25 to 50%, preferably from 35 to 45%,
Pr (as Pr₆O₁₁) : 2 to 10%, preferably from 2.5 to 6%
La (as La₂O₃) : 15 to 37%, preferably from 20 to 32%
Nd (as Nd₂O₃) : 4 to 15%, preferably from 5 to 13%
Y (as Y₂O₃) : 5 to 15%, preferably from 8 to 12%
Zr (as ZrO₂) : 5 to 25%, preferably from 10 to 17%

Advantageously, the catalyst precursor further comprises aluminium oxide and/or aluminosilicate and/or SiO₂ and/or silane and/or alumino phospho silicate.

Preferably, the catalyst precursor is in the form of particles with a size of less than 10µm, advantageously less than 5µm, preferably less than 200nm.

The invention further relates to a catalytic support, advantageously comprising aluminium, Ni, Co, etc., preferably made of an aluminium alloy, Ni-Co or Ni-CoAl alloys, said support being provided with a cerium oxide - carbon containing coating comprising the oxides of the followings elements Pr, Nd, La, Y and Zr, whereby the relative weight of the metals selected from Ce, Pr, La, Nd, Y and Zr, expressed as oxide CeO₂, Pr₆O₁₁, La₂O₃, Nd₂O₃, Y₂O₃. and ZrO₂ of the cerium - carbon containing coating with respect to total weight of the said metals expressed as oxides are :
Ce (as CeO₂): 25 to 50%, preferably from 35 to 45%,
Pr (as Pr₆O₁₁): 2 to 10%, preferably from 2.5 to 6%
La (as La₂O₃) : 15 to 37%, preferably from 20 to 32%
Nd (as Nd₂O₃) : 4 to 15%, preferably from 5 to 13%
Y (as Y₂O₃) : 5 to 15%, preferably from 8 to 12%
Zr (as ZrO₂) : 5 to 25%, preferably from 10 to 17%.

The cerium oxide - carbon containing coating has advantageously one or more of the characteristics of the coating disclosed in any one of the engines of the invention as disclosed here above. Said support is advantageously porous and/or flexible. Preferably said support is in the form of a porous membrane. The support is advantageously adhesive or partly adhesive,

### Brief Description of the drawing

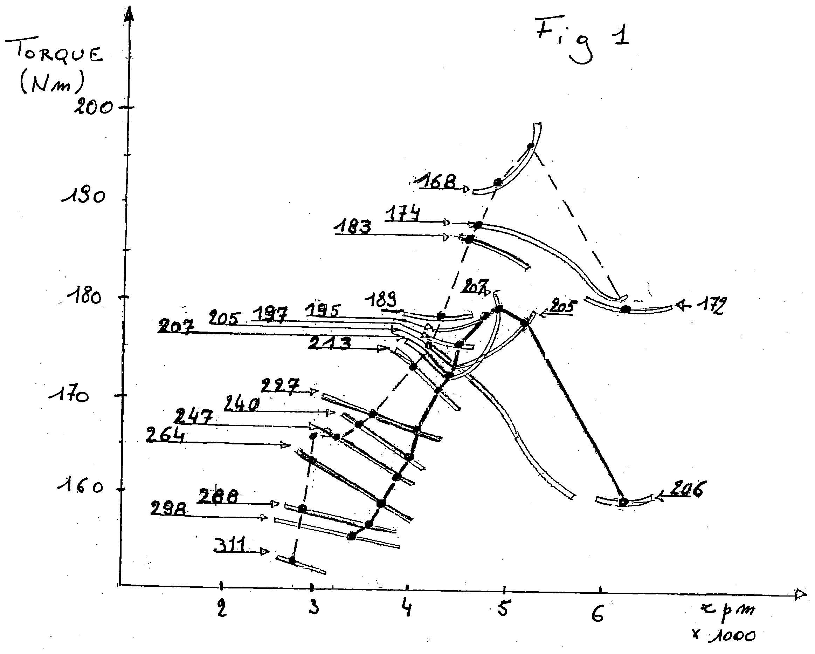

Figure 1 is a comparative engine bench testing graph showing the torque versus the rpm for an engine of the invention with respect to the same engine without the catalyst coating.

### Description of preferred embodiments

The present invention is an improvement of the technology disclosed in WO2006017915, US7482303, US7188470, EP1590555B1, and US7723257, the content of which is incorporated herein by reference.

Homogeneous charge combustion is according to the state of the art, the way to increase fuel efficiency of the car engine. Car companies have then developed several systems with computer control. However, all said systems have shown their limits, as unable to achieve correctly the goals of consumption, particle emission, etc.

The invention has for subject matter an engine provided with a heterogeneous catalyst enabling a live control of the combustion, even in case of large regime variation.

The combustion chamber of the engine have been coated with a catalyst precursor.

The precursor used was a mix of nano scale particles possibly dispersed in a wax or liquid, the composition of said mix being:
1. nano carbon primary particles with a size of less than 10 nm (possibly agglomerated into a structure with a size of less than 500nm. Said nano carbon primary particles are present in the precursor mix at a rate of 10 to 50% by weight, advantageously from 15 to 30% by weight, preferably about 20% by weight. Instead of using carbon nano particles as such, a wax possibly with carbon nano particles can be used. The carbon particles are preferably comprising some particles forming a two dimensional graphene structure, most particularly a mono layered two dimensional graphene structure.
2. a mix of metal oxide particles, especially of nanoparticles (particles with a size of less than 200nm, preferably at least partly less than 50nm. Said mix of metal particles comprises advantageously with respect to the total mix of said metal oxide particles (as weight %) :
   Ce (as CeO₂) : 25 to 50%, preferably from 35 to 45%,
   Pr (as Pr₆O₁₁) : 2 to 10%, preferably from 2.5 to 6%
   La (as La₂O₃) : 15 to 37%, preferably from 20 to 32%
   Nd (as Nd₂O₃) : 4 to 15%, preferably from 5 to 13%
   Y (as Y₂O₃) : 5 to 15%, preferably from 8 to 12%
   Zr (as ZrO₂) : 5 to 25%, preferably from 10 to 17%
   Al (as Al₂O₃) : 0 to 10%, preferably from 1% to 5%
   Si (as SiO2) : 0 to 10%, preferably from 0.5 to 5% (Said silicon can be in the form of liquid or soluble tetra ethoxy silane, in a solvent system, such as methanol, ethanol, etc.)

   The mix of nano oxide particles is advantageously a mix of nano oxide particles with a weight average size of more than 100 nm and of nano oxide particles with a weight average size of less than 70 nm, the weight ratio nano oxide particle with a weight average size greater than 100nm / nano particles with a weight average size lower than 70nm being comprised between 5:1 and 1:5, advantageously between 4:1 and 2:1.
3. possibly a wax or liquid system, for enabling some adhesion of the particles on the surface to be coated, said wax or liquid being preferably molecules comprising carbon and hydrogen, as well as preferably oxygen atoms. the weight ratio wax / mix of metal oxide particles is advantageously greater than 2, such as comprised from 2.5 up to 6.

The precursor was used for coating (for example by brushing, blowing, spraying, etc.) the wall of the combustion chambers and piston heads of the engine. The engine was made in an aluminium-based alloy. After said coating, the engine was driven with a fuel for 30 minutes. After said driving of the engine, the excess of catalyst was removed.
The catalyst coating had a thickness of less than about 70nm, with metal particles homogeneously dispersed. On the tube face of the combustion cylinders, substantially no catalyst was present or catalyst with a very small thickness.

The engine was then tested.

The following observations were thus found:
- high thermal stability of the catalyst
- high pressure stability
- high hydrogen stability
- working of the engine possible with different cetane number or octane number
- high ionic conductivity of the coating
- possible ignition control at different compression ratio from 6 up to more than 15, such as 20 or more, for example 22;
- possibility to burn at least partly the carbon and the hydrogen from the fuel separately, namely a large portion of the fuel carbon in the volume of the chamber (comprising the plasma zone adjacent to the catalyst coating(s), i.e. in a N2 enriched environment with respect to air), and a large portion of the fuel hydrogen on or in the catalyst coating(s) (i.e. namely in a 02 rich environment or in a reduced N2 environment with respect to air)
- High oxygen storage capacity, with high uptake and release oxygen rate
- High hydrogen storage capacity
- Possible down sizing of the filter, due to less small particle emissions, as well as down sizing of the three way catalyst exhaust
- Possibility to use a filter with large pore size
- Possibility to reduce pressure drop in the exhaust, at the level of the filter, as well as at the level of the three way catalyst
- quicker activation of the three way catalyst
- stable working of the catalyst during time, whereby less catalyst rejuvenation is needed
- possible working of the engine with lambda value higher than 1.3, such as higher than 1.4, such as from 1.4 to 1.3, such as from 1.5 to 2.1.
- improved post treatment
- less NOx
- low HC content in the exhaust gases
- less carbon particles exhaust (especially substantially no small sized carbon particles exhaust, such as substantially no carbon particle with a size of less than 5 µm)
- no soot formation in the combustion chamber
- no soot deposit in the exhaust pipe
- high water vapour exhaust.
- Lower fuel consumption
- Higher global amount of free electrons in the combustion chamber
- The combustion was a dual stratified combustion with two opposite surfaces provided with a cerium - carbon containing coating.

The engine was working with a fuel direct injection system, as well as preferably with a liquid water (as micro droplets) direct injection into the combustion chamber, such system are for example systems like the K-Jetronic range of systems of Bosch GmbH and WI (Water Injection) of Bosch GmbH. Water injection technologies are disclosed in US5174247, US6067964 and US6092514.

The following results were observed: lower fuel consumption, lower NOx emission, lower small carbon particles emission, better , improved working of the engine (less vibrations), better working of the filter and exhaust treatment system, etc.

The engine was an engine with compression ignition. It was observed that it was possible to increase the compression ratio before ignition in a spark ignition engine as well as for compression ignition engine, with respect to currently used ignition compression ratio. Moreover, possible ignition was possible with a spark plug within a large range of compression ratio.

As the pressure drop in the exhaust converter system and filter was reduced with respect to the pressure drop in the exhaust converter system and filter of the current engines, while ensuring a high level of removal of carbon particles and /or conversion of toxic NOx molecules, a better air filling of the combustion chamber was possible with the engine of the invention. Moreover when the air intake valve and the exhaust valve are both in open position, air can more easily flow through the combustion chamber of the engine of the invention, ensuring in this way an oxygen uptake by the catalyst coating, as well as a cooling of the combustion chamber, and even a high scavenging of exhaust gases.

In view of the lower pressure drop in the exhaust converter system, exhaust gases can be better used for driving into rotation of a turbine (for which ever purposes), when required and/or for EGR (exhaust gas recycling) purposes. Due to the low level of carbon particles content, EGR is better performing and the EGR system is not subject to clogging problems

The engine could also be an engine with spark ignition or with other means for controlling the ignition.

The engine can also be provide with Bosch like injectors for injecting water drops or droplets and/or water vapour in the air intake (before and/or after the air butterfly valve in the manifold , and/or directly within the combustion chamber).

The catalyst coating of the invention can thus be considered as being a highly coordinated selective, oxidising and reducing self supported redox catalytic system, whereby selective oxidising and selective reducing can vary or be controlled in function of temperature and photon emission.

Figure 1 is a comparative engine bench testing graph showing the torque (Nm) versus the rpm for an engine of the invention (dashed lines or catalysed burning) with respect to the same engine without the catalyst coating (continuous line, or conventional burning). Brake specific fuel consumption levels are expressed in grams (double lines). The tested vehicle was a Volvo engine, 5 cylinders, 2.41, with natural aspiration and porthole injection.

## Claims

1. An at least partly stratified charge combustion engine, in which the combustion of a hydrocarbon containing fuel generating a flame emitting photon is operated in a chamber with a wall provided with a cerium oxide - carbon containing coating, said coating at least comprising oxides of the followings elements Pr, Nd, La, Y and Zr, whereby said cerium oxide - carbon containing coating with the oxides of the followings elements Pr, Nd, La, Y and Zr, is adapted for controlling the formation of H+ species on the wall of the chamber, while controlling the hydrogen branching reactions by catalysing the use of oxygen atoms from Ce, Pr, Nd, La, Y and Zr oxides for reacting with hydrogen H₂ for the formation of H₂O on the wall of the chamber,
in which the relative weight of the metals selected from Ce, Pr, La, Nd, Y and Zr, expressed respectively as the following oxides CeO₂, Pr₆O₁₁, La₂O₃, Nd₂O₃, Y₂O₃. and ZrO₂ of the cerium - carbon containing coating with respect to total weight of the said metals expressed as oxides are :
Ce (as CeO₂) : 25 to 50%, preferably from 35 to 45%,
Pr (as Pr₆O₁₁) : 2 to 10%, preferably from 2.5 to 6%
La (as La₂O₃) : 15 to 37%, preferably from 20 to 32%
Nd (as Nd₂O₃) : 4 to 15%, preferably from 5 to 13%
Y (as Y₂O₃) : 5 to 15%, preferably from 8 to 12%
Zr (as ZrO₂) : 5 to 25%, preferably from 10 to 17%.

2. The engine of claim 1, in which the cerium oxide - carbon containing coating is a coating adapted for capturing photons emitted by the flame with wavelength from 6500 to 7500Å, advantageously for capturing 5 to 25% of the photons with wavelength from 6500 to 7500Å emitted by the flame having a temperature higher than 800°C, or a coating afapted for ensuring a photon amplified spectrum emission radiation at least at a temperature comprised between 500 and 800°C, said spectrum covering advantageously substantially the whole range from about 4000Å up to 7500Å.

3. The engine of any one of the preceding claims, which cycles comprise each at least four successive steps, namely an intake step for charging the combustion chamber with at least oxygen and nitrogen, a compression step in which said at least oxygen and nitrogen is compressed, a combustion step in the combustion chamber, and an exhaust step for the exhaust of gases present in the combustion chamber, whereby at least during one step selected from the group of the intake step and compression step, the cerium oxide - carbon coating comprising oxides of the followings elements Pr, Nd, La, Y and Zr, is adapted for uptaking oxygen atoms at temperature comprised between 100 and 400°C.

4. The engine of anyone of the preceding claims, in which the cerium oxide - carbon containing coating comprises enough oxides of Pr, Nd, La, Y and Zr, so as to convert at least by 50 mole %, advantageously at least by 75% that hydrogen H₂ contacting the cerium oxide - carbon containing coating into free H species and free OH species, at temperature above 500°C and pressure above 20 10⁵ Pa.

5. The engine of any one of the previous claims, in which the cerium oxide - carbon containing coating is a coating adapted for capturing photon emitted by the flame generated by the combustion of the carbon containing fuel, and/or a coating adapted for generating at least adjacent to the wall, spectra covering substantially continuously the whole range of spectra from about 4000 Å up to about 7500 Å.

6. The engine of any one of the previous claims, in which the cerium oxide - carbon containing coating is a coating adapted for controlling the number of photons in the combustion chamber, especially adjacent to the cerium oxide - carbon containing coating, during at least the combustion of the carbon containing fuel, said photons being advantageously a mix of photons covering the whole range spectra from about 4000 Å up to about 7500 Å.

7. The engine of anyone of the preceding claims, in which the cerium oxide - carbon containing coating comprises some aluminium, preferably in its oxide or hydroxide form and/or in the form of aluminosilicate, whereby the aluminium metal content of the catalyst coating with respect to the total metal weight content of the catalyst coating of metal selected from Al, Ce, Pr, Nd, La, Y and Zr is comprised between 1 and 10%.

8. The engine of anyone the preceding claims, in which the engine comprises cylinders having an alumino containing face, especially an alumino-silica containing face, said face being at least partly provided with the cerium oxide - carbon containing coating.

9. The engine of any one of the preceding claims, in which at least 50% of the carbon present in the cerium oxide - carbon containing coating is in the form of graphene units, possibly with some overlapping portions.

10. The engine of any one of the preceding claims, in which the cerium oxide - carbon containing coating is a catalyst adapted for controlling the formation of carbon particles in the form of porous graphite, especially in the form of graphene particles, within the combustion chamber, especially on the cerium oxide - carbon containing coating, and/or for reducing the exhaust of soot particles from the combustion chamber.

11. The engine of any one of the preceding claims, in which the cerium oxide - carbon containing coating is a catalyst emitting in function of the temperature rays with wave lengths in the violet range, rays with wavelengths in the blue range, rays with wave lengths in the green range, rays with wave lengths in the yellow range, as well as rays with wave lengths in the red range.

12. The engine of any one of the preceding claims, which is an at least partly dual stratified charge combustion engine, having advantageously two opposite surfaces provided with the cerium oxide - carbon containing coating, said opposite surfaces being preferably piston head surfaces or surfaces of two opposite moving piston heads.

13. A process of producing mechanical energy by burning a fuel into an air containing atmosphere in the combustion chamber(s) of an engine of anyone of the preceding claims, whereby the cerium oxide - carbon containing coating is submitted to a cycle comprising at least a step of oxygen removal from the air containing atmosphere by oxygen capture in the catalyst, and a step of water vapour formation at the catalyst level by reaction of hydrogen or hydrogen species.

14. A catalyst precursor for a catalyst of an engine according to anyone of the claims 1 to 12, said catalyst being a cerium oxide - carbon containing coating as disclosed in claim 1, in which the catalyst precursor is such that the relative weight of the metals selected from Ce, Pr, La, Nd, Y and Zr, expressed as oxide CeO₂, Pr₆O₁₁, La₂O₃, Nd₂O₃, Y₂O₃. and ZrO₂ of the cerium - carbon containing coating with respect to total weight of the said metals expressed as oxides are :
Ce (as CeO₂): 25 to 50%, preferably from 35 to 45%,
Pr (as Pr₆O₁₁) : 2 to 10%, preferably from 2.5 to 6%
La (as La₂O₃) : 15 to 37%, preferably from 20 to 32%
Nd (as Nd₂O₃) : 4 to 15%, preferably from 5 to 13%
Y (as Y₂O₃) : 5 to 15%, preferably from 8 to 12%
Zr (as ZrO₂) : 5 to 25%, preferably from 10 to 17%,
which advantageously further comprises aluminium oxide and/or aluminosilicate and/or alumino phospho silicate, while preferably being in the form of particles with a size of less than 10µm, advantageously less than 5 µm, preferably in the nano range.

15. A catalytic support, advantageously comprising aluminium, preferably made of an aluminium alloy, said support being provided with a cerium oxide - carbon containing coating comprising the oxides of the followings elements Ce, Pr, Nd, La, Y and Zr, whereby the relative weight of the metals selected from Ce, Pr, La, Nd, Y and Zr, expressed as oxide CeO₂, Pr₆O₁₁, La₂O₃, Nd₂O₃, Y₂O₃. and ZrO₂ of the cerium - carbon containing coating with respect to total weight of the said metals expressed as oxides are :
Ce (as CeO₂) : 25 to 50%, preferably from 35 to 45%,
Pr (as Pr₆O₁₁) : 2 to 10%, preferably from 2.5 to 6%
La (as La₂O₃) : 15 to 37%, preferably from 20 to 32%
Nd (as Nd₂O₃) : 4 to 15%, preferably from 5 to 13%
Y (as Y₂O₃) : 5 to 15%, preferably from 8 to 12%
Zr (as ZrO₂) : 5 to 25%, preferably from 10 to 17%.

## Patentansprüche

1. Verbrennungsmotor mit zumindest teilweise geschichteter Ladung, bei dem die Verbrennung eines kohlenwasserstoffhaltigen Brennstoffs, der eine Photonen emittierende Flamme erzeugt, betrieben wird in einer Kammer mit einer Wand, die mit einer Ceroxid-Kohlenstoff enthaltenden Beschichtung versehen ist, wobei die Beschichtung zumindest Oxide der folgenden Elemente umfasst: Pr, Nd, La, Y und Zr; wobei die Ceroxid-Kohlenstoff enthaltende Beschichtung mit den Oxiden der Elemente Pr, Nd, La, Y und Zr zur Steuerung der Bildung von H+ Spezies an der Wand der Kammer geeignet ist, während sie die Wasserstoffverzweigungsreaktionen durch Katalysieren der Verwendung von Sauerstoffatomen aus Ce-, Pr-, Nd-, La-, Y- und Zr-Oxiden zur Reaktion mit Wasserstoff H₂ zur Bildung von H₂O an der Wand der Kammer steuert,
wobei das relative Gewicht der Metalle, die aus Ce, Pr, La, Nd, Y und Zr ausgewählt sind, jeweils ausgedrückt als die folgenden Oxide CeO₂, Pr₆O₁₁, La₂O₃, Nd₂O₃, Y₂O₃ und ZrO₂ der Ceroxid-Kohlenstoff enthaltenden Beschichtung, bezogen auf das Gesamtgewicht der genannten Metalle, ausgedrückt als Oxide, jeweils ist:
Ce (als CeO₂) : 25 bis 50%, vorzugsweise 35 bis 45%,
Pr (als Pr₆O₁₁): 2 bis 10%, vorzugsweise von 2,5 bis 6%
La (als La₂O₃) : 15 bis 37%, vorzugsweise von 20 bis 32%
Nd (als Nd₂O₃): 4 bis 15%, vorzugsweise von 5 bis 13%
Y (als Y₂O₃): 5 bis 15%, vorzugsweise 8 bis 12%
Zr (als ZrO₂): 5 bis 25%, vorzugsweise von 10 bis 17%.

2. Motor nach Anspruch 1, bei dem die Ceroxid-Kohlenstoff enthaltende Beschichtung eine Beschichtung ist, die zum Einfangen von Photonen geeignet ist, die von der Flamme mit einer Wellenlänge von 6500 bis 7500 Ä emittiert werden, vorteilhafterweise zum Einfangen von 5 bis 25 % der Photonen mit einer Wellenlänge von 6500 bis 7500 Ä, die von der Flamme mit einer Temperatur von mehr als 800 °C emittiert werden, oder eine Beschichtung ist, die geeignet ist, eine Strahlung mit einem photonenverstärkten Spektrum zumindest bei einer Temperatur zwischen 500 und 800 °C zu gewährleisten, wobei das Spektrum vorteilhafterweise im Wesentlichen den gesamten Bereich von etwa 4000 Å bis 7500 Å abdeckt.

3. Motor nach einem der vorangegangenen Ansprüche, dessen Zyklen jeweils zumindest vier aufeinanderfolgende Schritte umfassen, nämlich einen Ansaugschritt zum Beschicken der Brennkammer mit zumindest Sauerstoff und Stickstoff, einen Verdichtungsschritt, in dem der zumindest vorhandene Sauerstoff und Stickstoff verdichtet wird, einen Verbrennungsschritt in der Brennkammer und einen Auslassschritt für das Auslassen der in der Verbrennungskammer vorhandenen Gase, wobei zumindest während eines Schritts, der aus der Gruppe von Einlassschritt und Verdichtungsschritt ausgewählt ist, die Ceroxid-Kohlenstoff-Beschichtung, die Oxide der folgenden Elemente umfasst: Pr, Nd, La, Y und Zr, zur Aufnahme von Sauerstoffatomen bei einer Temperatur zwischen 100 und 400 °C geeignet ist.

4. Motor nach einem der vorangegangenen Ansprüche, bei dem die Ceroxid-Kohlenstoff enthaltende Beschichtung genügend Oxide von Pr, Nd, La, Y und Zr umfasst, um zumindest 50 Mol-%, vorteilhafterweise zumindest 75 %, des Wasserstoffs H₂, der mit der Ceroxid-Kohlenstoff enthaltenden Beschichtung in Kontakt kommt, in freie H-Spezies und freie OH-Spezies umzuwandeln, und zwar bei einer Temperatur von über 500 °C und bei einem Druck von über 20 x 10⁵ Pa.

5. Motor nach einem der vorangegangenen Ansprüche, bei dem die Ceroxid-Kohlenstoff enthaltende Beschichtung eine Beschichtung ist, die geeignet ist, Photonen einzufangen, die von der durch die Verbrennung des kohlenstoffhaltigen Brennstoffs erzeugten Flamme emittiert werden, und/oder eine Beschichtung ist, die geeignet ist, zumindest in der Nähe der Wand Spektren zu erzeugen, die im Wesentlichen kontinuierlich den gesamten Bereich der Spektren von etwa 4000 Ä bis etwa 7500 Ä abdecken.

6. Motor nach einem der vorangegangenen Ansprüche, bei dem die Ceroxid-Kohlenstoff enthaltende Beschichtung eine Beschichtung ist, die geeignet ist, die Anzahl der Photonen in der Brennkammer, insbesondere in der Nähe der Ceroxid-Kohlenstoff enthaltenden Beschichtung, zumindest während der Verbrennung des kohlenstoffhaltigen Brennstoffs zu steuern, wobei die Photonen vorteilhafterweise eine Mischung von Photonen sind, die den gesamten Spektralbereich von etwa 4000 Å bis zu etwa 7500 Å abdecken.

7. Motor nach einem der vorangegangenen Ansprüche, bei dem die Ceroxid-Kohlenstoff enthaltende Beschichtung etwas Aluminium, vorzugsweise in seiner Oxid- oder Hydroxidform und/oder in Form von Aluminosilikat, umfasst, wobei der Aluminiummetallgehalt der Katalysatorbeschichtung in Bezug auf den Gesamtmetallgewichtsgehalt der Katalysatorbeschichtung aus Metall, ausgewählt aus Al Ce, Pr, Nd, La, Y und Zr, zwischen 1 und 10 % beträgt.

8. Motor nach einem der vorangegangenen Ansprüche, bei dem der Motor Zylinder umfasst, die eine aluminiumhaltige Fläche, insbesondere eine aluminosiliciumdioxidhaltige Fläche, aufweisen, wobei die Fläche zumindest teilweise mit der Ceroxid-Kohlenstoff enthaltenden Beschichtung versehen ist.

9. Motor nach einem der vorangegangenen Ansprüche, bei dem zumindest 50% des in der Ceroxid-Kohlenstoff enthaltenden Beschichtung vorhandenen Kohlenstoffs in Form von Grapheneinheiten vorliegt, möglicherweise mit einigen überlappenden Abschnitten.

10. Motor nach einem der vorangegangenen Ansprüche, bei dem die Ceroxid-Kohlenstoff enthaltende Beschichtung ein Katalysator ist, der geeignet ist, die Bildung von Kohlenstoffpartikeln in Form von porösem Graphit, insbesondere in Form von Graphenpartikeln, innerhalb der Verbrennungskammer, insbesondere auf der Ceroxid-Kohlenstoff enthaltenden Beschichtung, zu steuern und/oder den Ausstoß von Rußpartikeln aus der Verbrennungskammer zu reduzieren.

11. Motor nach einem der vorangegangenen Ansprüche, bei dem die Ceroxid-Kohlenstoff enthaltende Beschichtung ein Katalysator ist, der in Abhängigkeit von der Temperatur Strahlen mit Wellenlängen im violetten Bereich, Strahlen mit Wellenlängen im blauen Bereich, Strahlen mit Wellenlängen im grünen Bereich, Strahlen mit Wellenlängen im gelben Bereich, sowie Strahlen mit Wellenlängen im roten Bereich emittiert.

12. Motor nach einem der vorangegangenen Ansprüche, der ein Motor mit zumindest teilweise zweischichtiger Ladung ist, der vorteilhafterweise zwei gegenüberliegende Oberflächen aufweist, die mit der Ceroxid-Kohlenstoff enthaltenden Beschichtung versehen sind, wobei die gegenüberliegenden Oberflächen vorzugsweise Kolbenbodenoberflächen oder Oberflächen von zwei gegenüberliegenden beweglichen Kolbenböden sind.

13. Verfahren zur Erzeugung mechanischer Energie durch Verbrennen eines Brennstoffs in einer Luft enthaltenden Atmosphäre in der bzw. den Verbrennungskammer(n) eines Motors nach einem der vorangegangenen Ansprüche, wobei die Ceroxid-Kohlenstoff enthaltende Beschichtung einem Zyklus unterzogen wird, der zumindest einen Schritt der Sauerstoffentfernung aus der Luft enthaltenden Atmosphäre durch Sauerstoffeinfang in dem Katalysator und einen Schritt der Wasserdampfbildung auf dem Katalysatorniveau durch Reaktion von Wasserstoff oder Wasserstoffspezies umfasst.

14. Katalysatorvorläufer für einen Katalysator eines Motors nach einem der Ansprüche 1 bis 12, wobei der Katalysator eine Ceroxid-Kohlenstoff enthaltende Beschichtung nach Anspruch 1 ist, wobei der Katalysatorvorläufer so beschaffen ist, dass das relative Gewicht der Metalle, ausgewählt aus Ce, Pr, La, Nd, Y und Zr, ausgedrückt als Oxide CeO₂, Pr₆O₁₁, La₂O₃, Nd₂O₃, Y₂O₃ und ZrO₂ der Ceroxid-Kohlenstoff enthaltenden Beschichtung in Bezug auf das Gesamtgewicht der genannten Metalle, ausgedrückt als Oxide, jeweils ist:
Ce (als CeO₂) : 25 bis 50%, vorzugsweise 35 bis 45%,
Pr (als Pr₆O₁₁): 2 bis 10%, vorzugsweise von 2,5 bis 6%
La (als La₂O₃) : 15 bis 37%, vorzugsweise von 20 bis 32%
Nd (als Nd₂O₃): 4 bis 15%, vorzugsweise von 5 bis 13%
Y (als Y₂O₃): 5 bis 15%, vorzugsweise 8 bis 12%
Zr (als ZrO₂): 5 bis 25%, vorzugsweise von 10 bis 17%,
welches vorteilhafterweise des Weiteren Aluminiumoxid und/oder Alumosilikat und/oder Aluminophosphosilikat umfasst, während es vorzugsweise in Form von Teilchen mit einer Größe von weniger als 10 µm, vorteilhafterweise weniger als 5 µm, vorzugsweise im Nanobereich, vorliegt.

15. Katalytischer Träger, der vorteilhafterweise Aluminium umfasst, das vorzugsweise aus einer Aluminiumlegierung hergestellt ist, wobei der Träger mit einer Ceroxid-Kohlenstoff enthaltenden Beschichtung versehen ist, die die Oxide der folgenden Elemente umfasst: Ce, Pr, Nd, La, Y und Zr; wobei das relative Gewicht der Metalle, die aus Ce, Pr, La, Nd, Y und Zr ausgewählt sind, ausgedrückt als Oxide CeO₂, Pr₆O₁₁, La₂O₃, Nd₂O₃, Y₂O₃ und ZrO₂ der Ceroxid-Kohlenstoff enthaltenden Beschichtung in Bezug auf das Gesamtgewicht der genannten Metalle, ausgedrückt als Oxide, jeweils ist
Ce (als CeO₂) : 25 bis 50%, vorzugsweise 35 bis 45%,
Pr (als Pr₆O₁₁): 2 bis 10%, vorzugsweise von 2,5 bis 6%
La (als La₂O₃) : 15 bis 37%, vorzugsweise von 20 bis 32%
Nd (als Nd₂O₃): 4 bis 15%, vorzugsweise von 5 bis 13%
Y (als Y₂O₃): 5 bis 15%, vorzugsweise 8 bis 12%
Zr (als ZrO₂): 5 bis 25%, vorzugsweise von 10 bis 17%.

## Revendications

1. Moteur à combustion à charge au moins partiellement stratifiée, dans lequel la combustion d'un carburant contenant un hydrocarbure générant une flamme émettant des photons est mise en oeuvre dans une chambre avec une paroi pourvue d'un revêtement contenant de l'oxyde de cérium - carbone, ledit revêtement comprenant en outre au moins des oxydes des éléments suivants Pr, Nd, La, Y et Zr, dans lequel ledit revêtement contenant de l'oxyde de cérium - carbone avec les oxydes des éléments suivants Pr, Nd, La, Y et Zr, est adapté pour contrôler la formation d'espèces H⁺ sur la paroi de la chambre, tout en contrôlant les réactions de ramification de l'hydrogène en catalysant l'utilisation d'atomes d'oxygène à partir d'oxydes de Ce, Pr, Nd, La, Y et Zr pour réagir avec l'hydrogène H₂ pour le formation de H₂O sur la paroi de la chambre,
dans lequel le poids relatif des métaux choisis parmi Ce, Pr, La, Nd, Y et Zr, exprimé respectivement selon les oxydes suivants CeO₂, Pr₆O₁₁, La₂O₃, Nd₂O₃, Y₂O₃ et ZrO₂ du revêtement contenant du cérium-carbone par rapport au poids total desdits métaux exprimé en oxydes sont:
Ce (comme CeO₂): 25 à 50%, de préférence 35 à 45%,
Pr (en tant que Pr₆O₁₁): 2 à 10%, de préférence 2,5 à 6%
La (comme La₂O₃): 15 à 37%, de préférence 20 à 32%
Nd (comme Nd₂O₃): 4 à 15%, de préférence 5 à 13%
Y (comme Y₂O₃): 5 à 15%, de préférence 8 à 12%
Zr (comme ZrO₂): 5 à 25%, de préférence 10 à 17%.

2. Moteur selon la revendication 1, dans lequel le revêtement contenant de l'oxyde de cérium - carbone est un revêtement adapté pour capturer des photons émis par la flamme avec une longueur d'onde entre 6500 Å et 7500 Å, avantageusement pour capturer 5 à 25% des photons avec une longueur d'onde entre 6500 Å et 7500 Å émis par la flamme ayant une température supérieure à 800°C, ou un revêtement adapté pour assurer une radiation d'émission de spectre amplifiée de photons au moins à une température comprise entre 500 et 800°C, ledit spectre couvrant avantageusement sensiblement toute la gamme entre environ 4000 Å et 7500 Å.

3. Moteur selon l'une quelconque des revendications précédentes, les cycles duquel comprenant chacun au moins quatre étapes successives, à savoir une étape d'admission pour charger la chambre de combustion avec au moins de l'oxygène et de l'azote, une étape de compression dans laquelle lesdits au moins oxygène et azote sont comprimés, une étape de combustion dans la chambre de combustion, et une étape d'échappement pour l'échappement de gaz présents dans la chambre de combustion, dans lequel au moins pendant une étape choisie dans le groupe de l'étape d'admission et de l'étape de compression, le revêtement oxyde de cérium - carbone comprenant des oxydes des éléments suivants Pr, Nd, La, Y et Zr, est adapté pour l'absorption d'atomes d'oxygène à une température comprise entre 100 et 400 °C.

4. Moteur selon l'une quelconque des revendications précédentes, dans lequel le revêtement contenant de l'oxyde de cérium - carbone comprend suffisamment d'oxydes de Pr, Nd, La, Y et Zr, de manière à convertir au moins 50% en mole, avantageuseument au moins 75% en mole de l'hydrogène H₂ en contact avec le le revêtement contenant de l'oxyde de cérium - carbone en espèces H libres et en espèces OH libres, à une température supérieure à 500 ° C et à une pression supérieure à 20 10⁵ Pa.

5. Moteur suivant l'une quelconque des revendications précédentes, dans lequel le revêtement contenant de l'oxyde de cérium - carbone est un revêtement adapté pour capturer des photons émis par la flamme générée par la combustion du carburant contenant du carbone, et/ou un revêtement adapté pour générer au moins au voisinage de la paroi, des spectres couvrant sensiblement en continu toute la gamme de spectres d'environ 4000 Å à environ 7500 Å.

6. Moteur selon l'une quelconque des revendications précédentes, dans lequel le revêtement contenant de l'oxyde de cérium - carbone est un revêtement adapté pour contrôler le nombre de photons dans la chambre de combustion, en particulier au voisinage du revêtement contenant de l'oxyde de cérium - carbone, pendant au moins la combustion du carburant contenant du carbone, lesdits photons étant avantageusement un mélange de photons couvrant toute la gamme des spectres d'environ 4000 Å jusqu'à environ 7500 Å.

7. Moteur selon l'une quelconque des revendications précédentes, dans lequel le revêtement contenant de l'oxyde de cérium - carbone comprend de l'aluminium, de préférence sous forme oxyde ou hydroxyde et/ou sous forme d'aluminosilicate, la teneur en aluminium métallique du revêtement catalytique par rapport à la teneur pondérale totale en métal du revêtement catalytique en métal choisi parmi Al, Ce, Pr, Nd, La, Y et Zr étant comprise entre 1 et 10%.

8. Moteur selon l'une quelconque des revendications précédentes, dans lequel le moteur comprend des cylindres ayant une face contenant de l'alumium, en particulier une face contenant de l'alumino-silice, ladite face étant au moins en partie munie d'un revêtement contenant de l'oxyde de cérium - carbone.

9. Moteur selon l'une quelconque des revendications précédentes, dans lequel au moins 50% du carbone présent dans le revêtement contenant de l'oxyde de cérium - carbone est sous la forme d'unités de graphène, éventuellement avec certaines parties se chevauchant.

10. Moteur selon l'une quelconque des revendications précédentes, dans lequel le revêtement contenant de l'oxyde de cérium - carbone est un catalyseur adapté pour contrôler la formation de particules de carbone sous forme de graphite poreux, en particulier sous forme de particules de graphène, à l'intérieur de la chambre de combustion, en particulier sur le revêtement contenant de l'oxyde de cérium - carbone, et/ou pour réduire l'échappement des particules de suie de la chambre de combustion.

11. Moteur selon l'une quelconque des revendications précédentes, dans lequel le revêtement contenant de l'oxyde de cérium - carbone est un catalyseur émettant en fonction de la température des rayons avec des longueurs d'onde dans la gamme violette, des rayons avec des longueurs d'onde dans la gamme bleue, des rayons avec des longueurs d'onde dans la gamme verte, les rayons avec des longueurs d'onde dans la gamme jaune, ainsi que des rayons avec des longueurs d'onde dans la gamme rouge.

12. Moteur selon l'une quelconque des revendications précédentes, qui est un moteur à combustion à charge stratifiée au moins partiellement double, ayant avantageusement deux surfaces opposées pourvues d'un revêtement contenant de l'oxyde de cérium - carbone, lesdites surfaces opposées étant de préférence des surfaces de tête de piston ou des surfaces de deux faces de têtes de piston mobiles opposées l'une à l'autre.

13. Procédé de production d'énergie mécanique en brûlant un carburant dans une atmosphère contenant de l'air dans la ou les chambres de combustion d'un moteur selon l'une quelconque des revendications précédentes, dans lequel le revêtement contenant de l'oxyde de cérium - carbone est soumis à un cycle comprenant au moins une étape d'élimination d'oxygène de l'atmosphère contenant de l'air par capture d'oxygène dans le catalyseur, et une étape de formation de vapeur d'eau au niveau du catalyseur par réaction d'hydrogène ou des espèces d'hydrogène.

14. Précurseur de catalyseur pour un catalyseur d'un moteur selon l'une quelconque des revendications 1 à 22, ledit catalyseur étant un revêtement contenant de l'oxyde de cérium - carbone tel que décrit à la revendication 1, dans lequel le précurseur de catalyseur est tel que le poids relatif des métaux choisis parmi Ce, Pr, La, Nd, Y et Zr, exprimés sous forme d'oxyde CeO₂, Pr₆O₁₁, La₂O₃, Nd₂O₃, Y₂O₃ et ZrO₂ du revêtement contenant de l'oxyde de cérium - carbone par rapport au poids total desdits métaux exprimés en oxydes sont:
Ce (comme CeO₂): 25 à 50%, de préférence 35 à 45%,
Pr (comme Pr₆O₁₁): 2 à 10%, de préférence de 2,5 à 6%
La (comme La₂O₃): 15 à 37%, de préférence 20 à 32%
Nd (comme Nd₂O₃): 4 à 15%, de préférence 5 à 13%
Y (comme Y₂O₃): 5 à 15%, de préférence 8 à 12%
Zr (comme ZrO₂): 5 à 25%, de préférence 10 à 17%,
qui comprend en outre avantageusement de l'oxyde d'aluminium et/ou un aluminosilicate et/ou un alumino phospho silicate, tandis que se présentant de préférence sous la forme de particules de taille inférieure à 10µm, avantageusement inférieure à 5µm, de préférence dans la gamme nano.

15. Un support catalytique , comprenant avantageusement de l'aluminium, de préférence réalisé en un alliage à base d'aluminium, ledit support étant muni d'un revêtement contenant de l'oxyde de cérium - carbone tel que décrit à la revendication 1, dans lequel le précurseur de catalyseur est tel que le poids relatif des métaux choisis parmi Ce, Pr, La, Nd, Y et Zr, exprimés sous forme d'oxyde CeO₂, Pr₆O₁₁, La₂O₃, Nd₂O₃, Y₂O₃ et ZrO₂ du revêtement contenant de l'oxyde de cérium - carbone par rapport au poids total desdits métaux exprimé en oxydes sont:
Ce (comme CeO₂): 25 à 50%, de préférence 35 à 45%,
Pr (comme Pr₆O₁₁): 2 à 10%, de préférence de 2,5 à 6%
La (comme La₂O₃): 15 à 37%, de préférence 20 à 32%
Nd (comme Nd₂O₃): 4 à 15%, de préférence 5 à 13%
Y (comme Y₂O₃): 5 à 15%, de préférence 8 à 12%
Zr (comme ZrO₂): 5 à 25%, de préférence 10 à 17%.
